(19) Europäisches Patentamt
European Patent Office
Office européen des brevets

(11) **EP 3 624 972 B1**

(12) **EUROPÄISCHE PATENTSCHRIFT**

(45) Veröffentlichungstag und Bekanntmachung des Hinweises auf die Patenterteilung:
**06.01.2021   Patentblatt 2021/01**

(21) Anmeldenummer: **19713010.7**

(22) Anmeldetag: **22.03.2019**

(51) Int Cl.:
**B23B 27/16** *(2006.01)*       **B23B 27/10** *(2006.01)*

(86) Internationale Anmeldenummer:
**PCT/EP2019/057213**

(87) Internationale Veröffentlichungsnummer:
**WO 2019/211043 (07.11.2019 Gazette 2019/45)**

(54) **WERKZEUG ZUR SPANENDEN BEARBEITUNG EINES WERKSTÜCKS**

TOOL FOR MACHINING A WORKPIECE

OUTIL D'USINAGE D'UNE PIÈCE PAR ENLÈVEMENT DE COPEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2018   DE 102018110397**

(43) Veröffentlichungstag der Anmeldung:
**25.03.2020   Patentblatt 2020/13**

(73) Patentinhaber: **Hartmetall-Werkzeugfabrik Paul Horn GmbH**
**72072 Tübingen (DE)**

(72) Erfinder: **LUIK, Matthias**
**72766 Reutlingen (DE)**

(74) Vertreter: **Witte, Weller & Partner Patentanwälte mbB**
**Postfach 10 54 62**
**70047 Stuttgart (DE)**

(56) Entgegenhaltungen:
EP-A1- 1 495 821          WO-A1-93/05913
DE-A1- 3 033 626          JP-A- H0 825 109
US-A1- 2010 196 105

**Beschreibung**

Die vorliegende Erfindung betrifft ein Werkzeug gemäß dem Oberbegriff des Anspruchs 1 zur spanenden Bearbeitung eines Werkstücks, wobei das Werkzeug einen Halter mit einem ersten internen Kühlmittelkanal, eine Schneidplatte und ein erstes Befestigungselement zur lösbaren Befestigung der Schneidplatte am Halter aufweist.

DE 30 33 626 A1 offenbart ein Beispiel eines solchen Werkzeugs.

Derartige Werkzeuge mit einer auswechselbaren Schneidplatte und einem internen Kühlmittelkanal sind aus dem Stand der Technik bereits in vielfältiger Weise bekannt. Der interne Kühlmittelkanal dient dazu, Kühl- und/oder Schmiermittel (nachfolgend der Einfachheit halber als Kühlmittel bezeichnet) im Inneren des Werkzeughalters zu führen und in den Bereich oder zumindest in die Nähe der Schneidplatte zu leiten. Vielfach ist dazu in dem Halter eine zentrale Kühlmittelbohrung in Längsrichtung vorgesehen, durch die das Kühlmittel im Halterinneren geleitet wird.

Das Kühlmittel dient im Wesentlichen zur Kühlung und Schmierung der Schneidplatte während ihres Einsatzes. Neben einer Reduzierung des Schneidplattenverschleißes trägt das Kühlmittel darüber hinaus auch zu einer verbesserten Spanbildung bei und erhöht somit die Qualität der Oberflächenbeschaffenheit an dem zu bearbeitenden Werkstück.

Um eine gute Wirkweise garantieren zu können, ist es notwendig, dass der Kühlmittelstrahl so exakt wie möglich auf den Schneidenbereich der Schneidplatte ausgerichtet ist, um so nah wie möglich an die Stellen der Schneidplatte zu gelangen, welche mit dem zu bearbeitenden Werkstück in Kontakt stehen.

Ein häufiges Problem bei Werkzeugen mit Innenkühlung besteht in der Art der Anbringung des Kühlmittelkanals innerhalb des Werkzeughalters. Aus vorgenannten Gründen kommt es insbesondere auf die Anordnung der Kühlmittelaustrittsöffnung an, an der das Kühlmittel aus dem internen Kühlmittelkanal austritt.

Bei dem aus der DE 103 31 077 B3 bekannten Werkzeug ist die Kühlmittelaustrittsöffnung an einem turmartigen Aufbau des Halters angeordnet, welcher sich hinter und oberhalb der Schneidplatte befindet. Auf diese Weise wird das Kühlmittel von der Hinterseite der Schneidplatte schräg von oben in Richtung auf deren Hauptschneidkante gerichtet. Nichtsdestotrotz ist die Kühlmittelaustrittsöffnung dabei relativ weit entfernt von der Hauptschneidkante der Schneidplatte angeordnet. Dies ist im Anbetracht der oben genannten Anforderungen eher von Nachteil.

Ein weiteres Werkzeug, bei dem die Kühlmittelaustrittsöffnung ähnlich weit von der Hauptschneidkante der Schneidplatte entfernt ist, ist aus der EP 1 522 382 A1 bekannt. Auch hier wird der Kühlmittelstrahl von einer Stelle hinterhalb der Schneidplatte von schräg oben auf die Spanfläche der Schneidplatte gelenkt.

Bei dem aus der WO 2010/095124 A1 bekannten Werkzeug wird eine vergleichsweise schneidenahe Kühlung durch die Verwendung einer rohrförmigen Düse erreicht, welche axial verschieblich ist, um den Kühlmittelaustritt wie gewünscht positionieren zu können. Eine solche rohrförmige Düse ist jedoch aus vielerlei Hinsicht unerwünscht. Zum einen kann diese leicht brechen. Zum anderen ist zur Halterung der Düse ein relativ hoher Aufbau am Halter notwendig, was insbesondere bei beengten Einbausituationen in Werkzeugmaschinen von Nachteil ist.

Bei dem aus der DE 11 2011 102 930 T5 bekannten Werkzeug wird das Kühlmittel durch eine in der Schneidplatte vorgesehene, zentrale Öffnung hindurchgeführt und tritt an der Oberseite der Schneidplatte zwischen der Schneidplatte und einem Klemmaufsatz aus dem internen Kühlmittelkanal aus. Wenngleich sich hierdurch eine sehr schneidennahe Kühlung realisieren lässt, ist die in der DE 11 2011 102 930 T5 gezeigte Konstruktion relativ aufwendig. Aufgrund des Klemmaufsatzes ist der Wechsel der Schneidplatte zu dem relativ umständlich, da der gesamte Aufbau samt Klemmaufsatz vom Halter gelöst werden muss, um die Schneidplatte vom Halter zu trennen und diese auswechseln zu können.

Vor diesem Hintergrund ist es eine Aufgabe der vorliegenden Erfindung ein Werkzeug mit interner Kühlmittelführung bereitzustellen, bei dem die oben genannten Probleme ausgeräumt sind. Dabei ist es insbesondere eine Aufgabe für eine möglichst schneidennahe Kühlung zu sorgen und gleichzeitig einen einfachen Wechsel der Schneidplatte zu ermöglichen.

Erfindungsgemäß wird diese Aufgabe ausgehend von einem Werkzeug der eingangs genannten Art durch die Merkmale des Anspruchs 1 gelöst, wobei das Werkzeug einen im Wesentlichen plattenförmigen Kühlmittelführungsaufsatz mit einem zweiten internen Kühlmittelkanal und ein zweites Befestigungselement zur lösbaren Befestigung des Kühlmittelführungsaufsatzes am Halter aufweist. Im montierten Zustand des Werkzeugs ist der erste interne Kühlmittelkanal mit dem zweiten internen Kühlmittelkanal fluidisch verbunden und der Kühlmittelführungsaufsatz überdeckt zumindest einen Teil der Schneidplatte. Der Kühlmittelführungsaufsatz weist eine als Aussparung oder Durchgangsöffnung ausgestaltete erste Öffnung auf, welche einen Zugang zu dem ersten Befestigungselement ermöglicht, so dass die Schneidplatte durch Lösen des ersten Befestigungselements auch bei am Halter befestigten Kühlmittelführungsaufsatz separat von dem Halter lösbar ist und der Kühlmittelführungsaufsatz durch Lösen des zweiten Befestigungselements auch bei am Halter befestigter Schneidplatte separat von dem Halter lösbar ist, wobei der zweite interne Kühlmittelkanal eine erste Kühlmittelaustrittsöffnung und eine zweite Kühlmittelaustrittsöffnung aufweist, an denen Kühlmittel aus dem zweiten internen Kühlmittelkanal austritt, wobei die erste und die zweite Kühlmittelaustrittsöffnung an einer der Hauptschneidkante zugewandten Vorderseite des Kühlmittelführungsaufsatzes auf gegenüberliegenden Seiten der ersten Öffnung angeordnet sind, wobei die erste Kühlmittelaustrittsöffnung von einer imaginären Bezugsebene, die orthogonal zu der Längsachse des Halters ausgerichtet ist und in der eine Mittelachse des zweiten Befestigungselementes liegt, einen ersten Abstand hat, die zweite Kühlmittelaustrittsöffnung von der imaginären Bezugsebene einen zweiten Abstand hat, eine Mittelachse des ersten Befestigungselement von der imaginären Bezugsebene einen dritten Abstand hat, und zumindest ein Punkt auf der Hauptschneidkante einen vierten Abstand von der imaginären Bezugsebene hat, und wobei gilt: dritter Abstand ≤ zweiter Abstand ≤ erster Abstand < vierter Abstand.

Die erfindungsgemäße Lösung hat den Vorteil, dass aufgrund des Kühlmittelaufsatzes, welcher vorzugsweise oberhalb der Schneidplatte montiert ist und die Schneidplatte zumindest teilweise überdeckt, eine sehr schneidennahe Kühlung möglich ist. Der Kühlmittelführungsaufsatz wird oberhalb der Schneidplatte am Halter montiert und als eine Art separate Platte auf die Schneidplatte aufgesetzt. Der Kühlmittelführungsaufsatz weist zumindest zwei Kühlmittelaustrittsöffnungen, welche vorliegend als erste und zweite Kühlmittelaustrittsöffnungen bezeichnet werden, auf, an denen das Kühlmittel aus dem zweiten internen Kühlmittelkanal austritt. Aufgrund der Anordnung oberhalb der Schneidplatte und seiner plattenförmigen Ausgestaltung lässt sich diese Kühlmittelaustrittsöffnung sehr nahe am Schneidenbereich bzw. sehr nahe an der Hauptschneidkante der Schneidplatte positionieren. Eine kompakte Bauweise des Werkzeugs ist dabei dennoch sichergestellt.

Da die beiden Kühlmittelaustrittsöffnungen auf gegenüberliegenden Seiten der ersten Öffnung, die einen Zugang zu dem ersten Befestigungselement ermöglicht, angeordnet sind, ist es möglich, die Hauptschneidkante - trotz der quasi im Weg befindlichen ersten Öffnung im Kühlmittelführungsaufsatz - entlang eines Großteils ihrer Länge oder sogar entlang ihrer gesamten Länge mit Kühlmittel zu versorgen.

Die erwähnten Abstandsbeziehungen zwischen dem ersten, zweiten, dritten und vierten Abstand bedeuten mit anderen Worten, dass die Hauptschneidkante im Vergleich zu dem ersten Befestigungselement, mit dem die Schneidplatte am Halter befestigt ist, sowie im Vergleich zu den beiden Kühlmittelaustrittsöffnungen einen größeren Abstand von dem zweiten Befestigungselement, mit dem der Kühlmittelführungsaufsatz am Halter befestigt ist. Zudem sind die beiden Kühlmittelaustrittsöffnungen zumindest auf gleicher Höhe wie die Mittelachse des ersten Befestigungselements angeordnet oder sogar weiter beabstandet von dem zweiten Befestigungselement bzw. der imaginären Bezugsebene als die Mittelachse des ersten Befestigungselements. Dies bedeutet wiederum umgekehrt, dass die beiden Kühlmittelaustrittsöffnungen näher an der Hauptschneidkante angeordnet sind als das erste Befestigungselement, oder zumindest gleich nah an der Hauptschneidkante angeordnet sind wie das erste Befestigungselement. Der Kühlmittelführungsaufsatz umgibt also die erste Öffnung zumindest teilweise oder ragt seitlich sogar nach vorne über die Mittelachse des ersten Befestigungselements hinaus in Richtung zu der Hauptschneidkante. Dies ergibt eine sehr schneidennahe Kühlung und führt zu optimalen Kühlungseigenschaften der Hauptschneidkante und damit auch zu einem möglichst geringen Verschleiß der Hauptschneidkante.

Des Weiteren ergibt sich aus den oben genannten Abstandsbeziehungen, dass die Befestigung der Schneidplatte vergleichsweise näher an der Hauptschneidkante der Schneidplatte als die Befestigung des Kühlmittelführungsaufsatzes erfolgt. Das zweite Befestigungselement, mittels dessen der Kühlmittelführungsaufsatz befestigt wird, muss somit nicht durch die Schneidplatte hindurchgeführt werden. Dies erleichtert zudem die separate Demontagemöglichkeit von Schneidplatte und Kühlmittelführungsaufsatz.

Bei der imaginären Bezugsebene handelt es sich um eine Ebene, die hier lediglich als Bezugsebene zur Beschreibung der räumlichen Anordnung verwendet wird, die jedoch nicht körperlich vorhanden ist. Diese imaginäre Bezugsebene wird von der Mittelachse des zweiten Befestigungselements und einer orthogonal zu der Längsachse des Halters ausgerichteten Achse aufgespannt. Sie schneidet das zweite Bezugselement also mittig entlang seiner Mittelachse und ist orthogonal zu der Längsachse des Halters ausgerichtet.

Ein weiterer Vorteil der erfindungsgemäßen Lösung besteht darin, dass der Kühlmittelführungsaufsatz separat von der Schneidplatte am Halter befestigt ist. Mit "separat" ist hier nicht eine örtliche Separierung gemeint. Gemeint ist vielmehr, dass beide Elemente (die Schneidplatte und der Kühlmittelführungsaufsatz) voneinander getrennt jeweils einzeln mit separaten Befestigungselementen, vorzugsweise direkt mit dem Halter verbunden sind, so dass sich sowohl die Schneidplatte als auch der Kühlmittelführungsaufsatz unabhängig voneinander am Halter montieren und demontieren lassen.

Somit lässt sich beispielsweise die Schneidplatte, welche das Hauptverschleißteil des erfindungsgemäßen Werkzeugs darstellt, von dem Halter lösen und durch eine neue Schneidplatte ersetzen, ohne dass hierfür der Kühlmittelführungsaufsatz von dem Halter demontiert werden muss. Aufgrund der als Aussparung oder Durchgangsöffnung ausgestalteten ersten Öffnung im Kühlmittelführungsaufsatz ist ein Zugang zu dem ersten Befestigungselement, mit dem die Schneidplatte an dem Halter befestigt ist, zu jedem Zeitpunkt gegeben.

Im Falle der Verwendung einer Schraube als erstes Befestigungselement ist der Werkzeugeingriff dieser Schraube für einen Werkzeugschlüssel auch dann ohne weiteres zugänglich, wenn der Kühlmittelführungsaufsatz einen Großteil der Schneidplatte überdeckt. Da der Kühlmittelführungsaufsatz und die Schneidplatte nicht gemeinsam am Halter befestigt sind, lässt sich umgekehrt auch der Kühlmittelführungsaufsatz von dem Halter lösen, ohne dass dies eine Demontage der Schneidplatte bedingt.

Die Form des Kühlmittelführungsaufsatzes lässt sich bei dieser Art der Konstruktion im Übrigen auch optimal an die Gegebenheiten, also z.B. an die Form der Schneidplatte und/oder den gewünschten Kühlmitteleinsatzzweck anpassen.

Die oben genannte Aufgabe ist somit vollständig gelöst.

Gemäß einer Ausgestaltung ist der erste Abstand gleich groß wie der zweite Abstand. Die beiden Kühlmittelaustrittsöffnungen haben demnach den gleichen Abstand von der Mittelachse des zweiten Befestigungselementes bzw. der imaginären Ebene. Umgekehrt haben die beiden Kühlmittelaustrittsöffnungen dadurch bevorzugt auch den gleichen Abstand von der Hauptschneidkante. Dies ist insbesondere von Vorteil, wenn es sich bei der Hauptschneidkante um eine gerade Schneidkante handelt, die orthogonal zu der Längsrichtung des Halters ausgerichtet ist. Hierbei gilt bevorzugt: dritter Abstand < zweiter Abstand = erster Abstand < vierter Abstand.

Sofern es sich bei der Hauptschneidkante jedoch um eine schräg angestellte oder zumindest teilweise kurvenförmige Schneidkante mit vergleichsweise komplexerer Geometrie handelt, können der erste und der zweite Abstand auch unterschiedlich groß gewählt sein, so dass eine Kühlmittelaustrittsöffnung im Vergleich zu der anderen weiter vorne angeordnet ist. Die Bedingung, dass der erste und der zweite Abstand gleich groß oder größer als der dritte Abstand sind, gilt jedoch auch für diese alternative Ausgestaltung. Hierbei würde also gelten: dritter Abstand < zweiter Abstand < erster Abstand < vierter Abstand.

Gemäß einer Ausgestaltung der Erfindung weist der zweite interne Kühlmittelkanal eine Kühlmitteleintrittsöffnung auf, an der das Kühlmittel in den zweiten internen Kühlmittelkanal eintritt, wobei die Kühlmitteleintrittsöffnung einen fünften Abstand von der Hauptschneidkante der imaginären Ebene hat, der kleiner als der dritte Abstand ist.

Das Kühlmittel fließt innerhalb des Kühlmittelführungsaufsatzes also von hinten nach vorne. Dies ist insbesondere aus fluiddynamischer Sicht von Vorteil, da das Kühlmittel somit nicht allzu stark umgelenkt wird und kaum an Geschwindigkeit verliert.

Die Kühlmitteleintrittsöffnung ist vorzugsweise auf einer Unterseite des Kühlmittelführungsaufsatzes angeordnet, welche in montiertem Zustand des Werkzeugs einer Aussenseite des Halters zugewandt ist. Die erste und die zweite Kühlmittelaustrittsöffnung sind vorzugsweise auf einer Vorderseite des Kühlmittelführungsaufsatzes angeordnet, welche in montiertem Zustand des Werkzeugs der Hauptschneidkante der Schneidplatte zugewandt ist und quer zu der Unterseite verläuft. Unter "quer" wird vorliegend nicht zwangsläufig orthogonal, sondern jede nicht-parallele Ausrichtung verstanden.

Wenngleich vorliegend von nur einer Kühlmitteleintrittsöffnung die Rede ist, versteht es sich, dass der Kühlmittelführungsaufsatz auch mehrere, separate Kühlmitteleintrittsöffnungen aufweisen kann. Es ist jedoch von Vorteil, wenn der Kühlmittelführungsaufsatz nur eine einzige Kühlmitteleintrittsöffnung aufweist, da dies die Kühlmittelübergabe zwischen dem im Halter befindlichen ersten internen Kühlmittelkanal auf den im Kühlmittelführungsaufsatz befindlichen zweiten internen Kühlmittelkanal vereinfacht. Da die beiden Kühlmittelkanäle (erster interner Kühlmittelkanal und zweiter interner Kühlmittelkanal) in montiertem Zustand des Werkzeugs miteinander fluidisch verbunden sind, bilden diese dann einen gemeinsamen, zusammenhängenden Kühlmittelkanal.

Die Tatsache, dass es sich um einen gemeinsamen, zusammenhängenden Kühlmittelkanal handelt, impliziert jedoch nicht, dass dieser zusammenhängende Kühlmittelkanal nicht mehrere Verzweigungen aufweist. Vorzugsweise verzweigt sich der im Kühlmittelführungsaufsatz befindliche zweite interne Kühlmittelkanal in mehrere Kanalteile, welche in unterschiedliche Kühlmittelaustrittsöffnungen münden, an der das Kühlmittel aus dem Kühlmittelführungsaufsatz austritt.

Gemäß einer weiteren Ausgestaltung erstreckt sich der zweite interne Kühlmittelkanal im Inneren des Kühlmittelführungsaufsatzes zumindest teilweise um die erste Öffnung herum.

Diese erste Öffnung, welche als Aussparung oder Durchgangsöffnung ausgestaltet ist, dient, wie bereits erwähnt, als Zugang für einen Werkzeugschlüssel zu dem ersten Befestigungselement, mithilfe dessen die Schneidplatte an dem Halter lösbar befestigt ist. Der zweite interne Kühlmittelkanal verläuft zumindest teilweise an dieser Öffnung vorbei, ohne mit dieser zu kollidieren.

Vorzugsweise ist die erste Öffnung in Umfangsrichtung durch einen Innenwandung begrenzt, wobei ein Teil dieser Innenwandung, welche im Vergleich zu den übrigen Teilen der Innenwandung der imaginären Bezugsebene (E) am nächsten gelegen ist, einen sechsten Abstand von der imaginären Bezugsebene hat, der kleiner als der dritte Abstand ist.

Die am Kühlmittelführungsaufsatz angeordneten ersten und zweiten Kühlmittelaustrittsöffnung sind in montiertem Zustand des Werkzeugs also vorzugsweise näher an der Hauptschneidkante der Schneidplatte angeordnet als zumindest ein Teil der Innenwandung der ersten Öffnung. Dies trägt weiterhin positiv zu dem oben genannten Vorteil einer möglichst schneidennahen Kühlung bei, wobei gleichzeitig ein einfacher Austausch der Schneidplatte möglich ist, ohne den Kühlmittelaufsatz dafür von dem Halter lösen zu müssen.

Gemäß einer weiteren bevorzugten Ausgestaltung weist der zweite interne Kühlmittelkanal zumindest einen gekrümmten Abschnitt auf. Dieser gekrümmte Abschnitt dient zur Führung des Kühlmittels an der ersten Öffnung vorbei.

Vorzugsweise ist dieser Abschnitt bogenförmig gekrümmt. Eine bogenförmige Krümmung hat im Vergleich zu einer eckigen bzw. winkligen Ausgestaltung des zweiten internen Kühlmittelkanals fluiddynamische Vorteile, da das Kühlmittel im Inneren des Kühlmittelführungsaufsatzes somit keine "harten" Umlenkungen mit erhöhtem Strömungswiderstand erfährt.

Ein solcher gekrümmter Kühlmittelführungskanal lässt sich am einfachsten durch additive Fertigung des Kühlmittelführungsaufsatzes herstellen. Unter additiver Fertigung, welche häufig auch als generative Fertigung bezeichnet wird, werden alle Fertigungsverfahren zusammengefasst, die zur schnellen und kostengünstigen Fertigung von Teilen führen und auf Basis rechnerinterner Datenmodelle (beispielsweise CAD-Datenmodelle) aus formlosem oder formneutralem Material mittels chemischer und/oder physikalischer Prozesse erfolgen. Beispiele solcher additiver Fertigungsverfahren sind 3D-Druck, Stereolithographie, selektives Laserschmelzen, selektives Lasersintern, etc..

Auf herkömmliche Art und Weise, also durch eine Herstellung interner Bohrungen im Kühlmittelführungsaufsatz sind solche gekrümmten Kanalabschnitte kaum herstellbar. Die Herstellung des Kühlmittelführungsaufsatzes mithilfe additiver Fertigung ermöglicht zum einen also die Herstellung eines Kühlmittelkanals mit einer fluiddynamisch optimal ausgelegten Form. Zum andern lässt sich der zweite interne Kühlmittelkanal damit relativ einfach um die erste Öffnung herumleiten. Weiterhin ergeben sich dadurch erhebliche Kostenvorteile bei der Herstellung des Kühlmittelführungsaufsatzes.

Der zweite interne Kühlmittelkanal weist vorzugsweise einen ersten Kanalteil, welcher in die erste Kühlmittelaustrittsöffnung mündet, sowie einen zweiten Kanalteil, welcher in die zweite Kühlmittelaustrittsöffnung mündet, auf, wobei sowohl der erste als auch der zweite Kanalteil fluidisch mit der Kühlmitteleintrittsöffnung verbunden sind. Die beiden Kanalteile zweigen also vorzugsweise innerhalb des Kühlmittelführungsaufsatzes voneinander ab und verlaufen auf unterschiedlichen Seiten der ersten Öffnung.

Statt nur zweier Kühlmittelaustrittsöffnungen können am Kühlmittelführungsaufsatz auch noch mehr Kühlmittelaustrittsöffnungen vorgesehen sein, welche auf unterschiedlichen Seiten der ersten Öffnung angeordnet sind.

Gemäß einer weiteren Ausgestaltung ist die am Kühlmittelführungsaufsatz angeordnete erste Öffnung als Langloch ausgestaltet.

Die Ausgestaltung als Langloch bietet den Vorteil, dass der Kühlmittelführungsaufsatz gegenüber dem Halter in unterschiedlichen Positionen angeordnet werden kann, ohne dass dabei der Zugang zu dem ersten Befestigungselement, mithilfe dessen die Schneidplatte am Halter befestigt ist, verlorengeht.

Vorzugsweise weist das Langloch eine Mittelachse auf, welche parallel zu der Längsachse des Halters verläuft. Der Kühlmittelführungsaufsatz lässt sich somit dann quer zur Hauptschneidkante der Schneidplatte verschieben, um den Abstand der zumindest einen am Kühlmittelführungsaufsatz angeordneten Kühlmittelaustrittsöffnung von der Hauptschneidkante der Schneidplatte je nach Wunsch einzustellen.

Bei dieser Ausgestaltung ist es ebenfalls bevorzugt, dass das zweite Befestigungselement, mithilfe dessen der Kühlmittelführungsaufsatz am Halter befestigt ist, ebenfalls durch ein im Kühlmittelführungsaufsatz befindliches Langloch hindurch am Halter befestigt ist. Die Mittelachse dieses zweiten Langlochs verläuft vorzugsweise parallel zu der Mittelachse der als Langloch ausgestalteten ersten Öffnung.

Gemäß einer weiteren Ausgestaltung weist das Werkzeug zusätzlich zu dem ersten Befestigungselement ein drittes Befestigungselement zur Befestigung der Schneidplatte am Halter auf, wobei der Kühlmittelführungsaufsatz eine als Aussparung oder Durchgangsöffnung ausgestaltete zweite Öffnung aufweist, welche einen Zugang zu dem dritten Befestigungselement ermöglicht.

Diese Ausgestaltung ist insbesondere bei der Verwendung von breiteren Schneidplatten von Vorteil, welche mithilfe von zwei Befestigungselementen befestigt werden. Auch in diesem Fall garantiert der erfindungsgemäße Kühlmittelführungsaufsatz einen Zugang für einen Werkzeugschlüssel zu beiden Befestigungselementen (erstes und drittes Befestigungselement), mit denen die Schneidplatte am Halter befestigt ist. Somit lässt sich auch bei dieser Ausgestaltung die Schneidplatte separat von dem Kühlmittelführungsaufsatz vom Halter lösen. Die genannte zweite Öffnung kann ebenfalls als Langloch ausgestaltet sein, was zu den oben genannten Vorteilen führt.

Bei einer Weiterbildung der zuletzt genannten Ausgestaltung weist der zweite interne Kühlmittelkanal einen ersten Kanalteil, welcher in die erste Kühlmittelaustrittsöffnung mündet, einen zweiten Kanalteil, welcher in eine zweite Kühlmittelaustrittsöffnung mündet, und einen dritten Kanalteil, welcher in eine dritte Kühlmittelaustrittsöffnung mündet, auf, wobei die erste Öffnung zwischen dem ersten und dem zweiten Kanalteil angeordnet ist, und wobei die zweite Öffnung zwischen dem zweiten und dem dritten Kanalteil angeordnet ist.

Der zweite interne Kühlmittelkanal weist gemäß dieser Weiterbildung also mehrere Kanalteile auf, welche auf unterschiedlichen Seiten der im Kühlmittelführungsaufsatz angeordneten Öffnungen verlaufen. Trotz mehrerer Befestigungselemente ist es gemäß dieser Weiterbildung also ebenfalls möglich, Kühlmittel an verschiedene Stellen entlang der Hauptschneidkante der Schneidplatte zu führen.

Zur Befestigung der Schneidplatte ist innerhalb der Schneidplatte vorzugsweise eine erste Befestigungsöffnung vorgesehen. Zur Befestigung des Kühlmittelführungsaufsatzes ist im Kühlmittelführungsaufsatz vorzugsweise eine zweite Befestigungsöffnung vorgesehen. Das erste Befestigungselement ist in montiertem Zustand des Werkzeugs durch die erste Befestigungsöffnung hindurch in den Halter eingesetzt. Das zweite Befestigungselement ist in montiertem Zustand des Werkzeugs durch die zweite Befestigungsöffnung hindurch in den Halter eingesetzt.

Vorzugsweise ist das erste Befestigungselement als eine erste Schraube und das zweite Befestigungselement als eine zweite Schraube ausgestaltet. Dementsprechend weist der Halter vorzugsweise ein erstes Innengewinde zum Einschrauben der ersten Schraube sowie ein zweites Innengewinde zum Einschrauben der zweiten Schraube auf.

Wie bereits erwähnt, können anstelle eines Befestigungselements bzw. einer Schraube auch mehrere Befestigungselemente bzw. mehrere Schrauben zur Befestigung der Schneidplatte verwendet werden. Ebenso können anstelle eines Befestigungselements bzw. einer Schraube auch mehrere Befestigungselemente bzw. mehrere Schrauben zur Befestigung des Kühlmittelführungsaufsatzes verwendet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:

Fig. 1 eine perspektivische Ansicht eines ersten Ausführungsbeispiels des erfindungsgemäßen Werkzeugs;

Fig. 2 eine Explosionsdarstellung des in Fig. 1 gezeigten Werkzeugs;

Fig. 3 eine erste Längsschnitt-Ansicht des in Fig. 1 gezeigten Werkzeugs;

Fig. 4 eine Draufsicht von oben auf das in Fig. 1 gezeigte Werkzeug ohne Kühlmittelführungsaufsatz;

Fig. 5 eine zweite Längsschnitt-Ansicht des in Fig. 1 gezeigten Werkzeugs;

Fig. 6 mehrere Ansichten des Kühlmittelführungsaufsatzes gemäß einem Ausführungsbeispiel;

Fig. 7 mehrere Ansichten des Kühlmittelführungsaufsatzes gemäß einem weiteren Ausführungsbeispiel;

Fig. 8 eine perspektivische Ansicht eines zweiten Ausführungsbeispiels des erfindungsgemäßen Werkzeugs;

Fig. 9 eine Explosionsdarstellung des in Fig. 8 gezeigten Werkzeugs;

Fig. 10 eine Draufsicht von oben auf das in Fig. 8 gezeigte Werkzeug ohne Kühlmittelführungsaufsatz;

Fig. 11 eine Längsschnitt-Ansicht des in Fig. 10 gezeigten Werkzeugs ohne Kühlmittelführungsaufsatz; und

Fig. 12 mehrere Ansichten des Kühlmittelführungsaufsatzes gemäß einem dritten Ausführungsbeispiel.

Das erfindungsgemäße Werkzeug ist in den Zeichnungen gesamthaft mit der Bezugsziffer 10 gekennzeichnet.

Das Werkzeug 10 weist einen Werkzeughalter 12 auf, an dem eine Schneidplatte 14 und einen Kühlmittelführungsaufsatz 16 lösbar befestigt sind. Der Werkzeughalter 12 wird im Nachfolgenden der Einfachheit halber als Halter 12 bezeichnet.

Im vorliegenden Ausführungsbeispiel weist der Halter 12 einen im Wesentlichen balkenförmigen, länglichen Grundkörper auf, an dessen vorderen Ende eine Schneidplattenaufnahme 18 zur Aufnahme der Schneidplatte 14 angeordnet ist. Im Bereich des gegenüberliegenden hinteren Endes des Halters 12 ist ein Kühl-/Schmiermittelanschluss 20 angeordnet. Üblicherweise wird der balkenförmige Grundkörper des Halters 12 in einer Werkzeugmaschine eingespannt. Der Kühl-/Schmiermittelanschluss 20 wird an eine Kühl/Schmiermittelversorgung angeschlossen, um Kühlmittel durch das Innere des Halters 12 in den Bereich der Schneidplatte 14 zu leiten.

Die Schneidplatte 14 und der Kühlmittelführungsaufsatz 16 sind separat voneinander am Halter 12 lösbar befestigt. Zur Befestigung der Schneidplatte 14 wird ein erstes Befestigungselement 22 verwendet, welches in dem vorliegenden Ausführungsbeispiel als Schraube ausgestaltet ist. Zur Befestigung des Kühlmittelführungsaufsatzes 16 wird ein zweites Befestigungselement 24 verwendet, welches im vorliegenden Ausführungsbeispiel ebenfalls als Schraube ausgestaltet ist. Beide Schrauben 22, 24 sind in montiertem Zustand des Werkzeugs 10 in den Halter 12 eingesetzt. Der Halter 12 weist ein erstes Innengewinde 26 zum Einschrauben der ersten Schraube 22 sowie ein zweites Innengewinde 28 zum Einschrauben der zweiten Schraube 24 auf. Die erste Schraube 22 ist durch eine in der Schneidplatte 14 angeordnete erste Befestigungsöffnung 27 hindurch in das erste Innengewinde 26 eingeschraubt. Die zweite Schraube 24 ist durch eine im Kühlmittelführungsaufsatz 16 angeordnete zweite Befestigungsöffnung 29 in das zweite Innengewinde 28 eingeschraubt.

In montiertem Zustand des Werkzeugs 10 ist der Kühlmittelführungsaufsatz 16 oberhalb des Schneideinsatzes 14 angeordnet, wobei der Kühlmittelführungsaufsatz 16 zumindest einen Teil der Schneidplatte 14 überdeckt. Grundsätzlich kann der Kühlmittelführungsaufsatz 16 direkt auf die Schneidplatte 14 aufgelegt werden, so dass die Unterseite des Kühlmittelführungsaufsatzes 16 die Oberseite der Schneidplatte 14 kontaktiert. Es ist jedoch von Vorteil, dass zwischen der Unterseite des Kühlmittelführungsaufsatzes und der Oberseite der Schneidplatte 14 ein kleiner Luftspalt existiert, so dass der Kühlmittelführungsabsatz 16 mit der Schneidplatte 14 nicht in direktem Kontakt steht. Dies ermöglicht eine einfachere Austauschbarkeit der Schneidplatte 14, welche nach Lösen des ersten Befestigungselements 22 einfach unterhalb des Kühlmittelführungsaufsatzes 16 herausgezogen werden kann. Dies wäre bei einem Kontakt zwischen Schneidplatte 14 und Kühlmittelführungsaufsatz 16 natürlich ebenfalls möglich. Der Kühlmittelführungsaufsatz 16 sollte dabei jedoch nicht mit allzu großer Kraft auf die Schneidplatte 14 drücken.

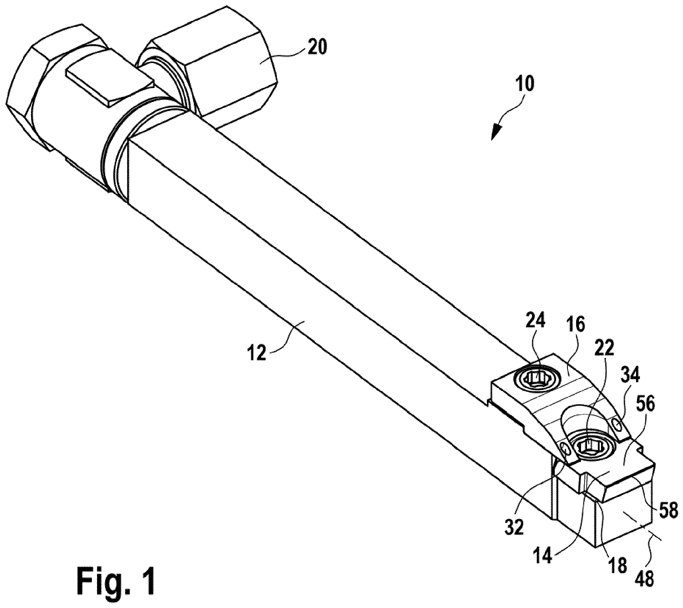

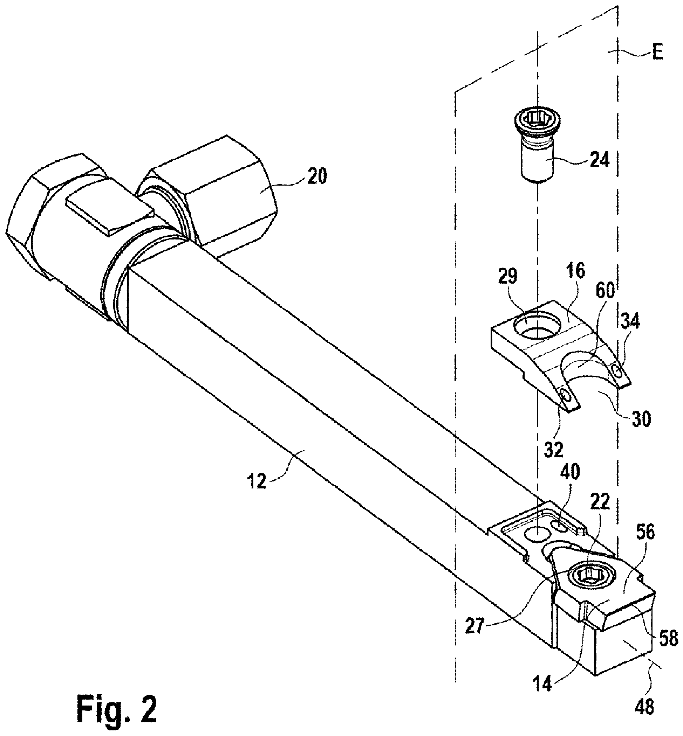

Der Kühlmittelführungsaufsatz 16 weist im Bereich seines vorderen Endes eine Öffnung 30 auf, welche vorliegend als erste Öffnung 30 bezeichnet wird. Diese erste Öffnung 30 ist in dem in Fig. 1 und 2 gezeigten ersten Ausführungsbeispiel als eine Aussparung ausgestaltet. Die erste Öffnung 30 dient als Zugang zu dem ersten Befestigungselement 22, mithilfe dessen die Schneidplatte 14 an dem Halter 12 befestigt ist. Genauer gesagt, ermöglicht die erste Öffnung 30 einen Zugang zu dem ersten Befestigungselement 22 für einen Werkzeugschlüssel, um das erste Befestigungselement 22 und damit auch die Schneidplatte 14 auch bei montiertem Kühlmittelführungsaufsatz 16 von dem Halter 12 lösen zu können. Die Schneidplatte 14 ist durch Lösen des ersten Befestigungselements 22 somit also auch beim am Halter 12 befestigten Kühlmittelführungsaufsatz 16 separat von dem Halter 12 lösbar. Umgekehrt ist der Kühlmittelführungsaufsatz 16 durch Lösen des zweiten Befestigungselements 24 auch bei am Halter 12 befestigter Schneidplatte 14 separat von dem Halter 12 lösbar.

Das über den Kühlmittelanschluss 20 in das Werkzeug 10 eingeleitete Kühlmittel gelangt durch das Innere des Halters 12 in den Kühlmittelführungsaufsatz 16 und tritt im vorliegend gezeigten Ausführungsbeispiel schlussendlich an zwei Kühlmittelaustrittsöffnungen 32, 34 aus dem Kühlmittelführungsaufsatz 16 aus. Die Kühlmittelaustrittsöffnungen 32, 34 werden zu deren besserer Differenzierung vorliegend als erste Kühlmittelaustrittsöffnung 32 und zweite Kühlmittelaustrittsöffnung 34 bezeichnet. Selbstverständlich ist es auch denkbar, mehr als zwei Kühlmittelaustrittsöffnungen am Kühlmittelführungsaufsatz 16 vorzusehen.

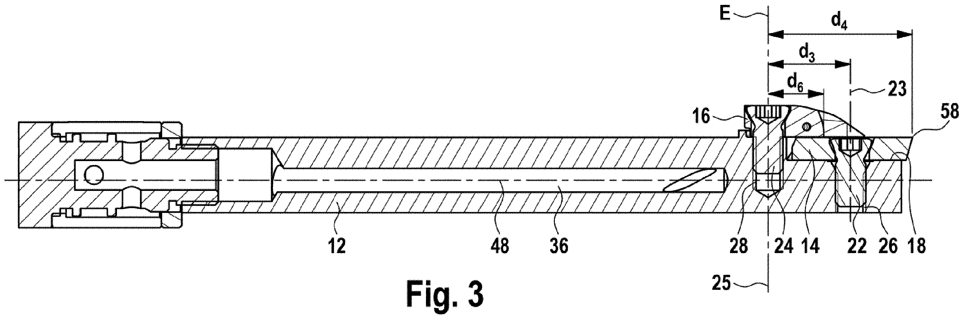

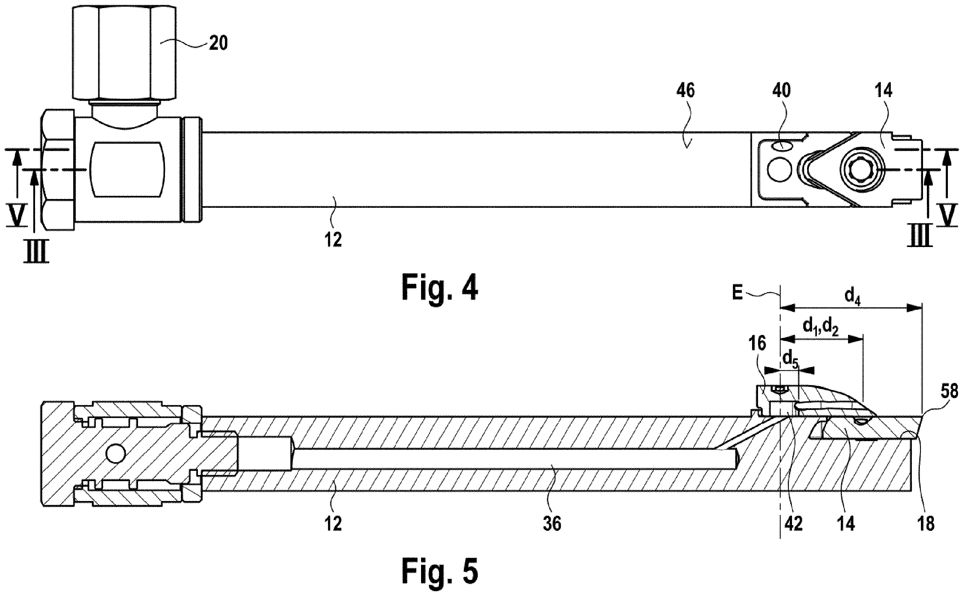

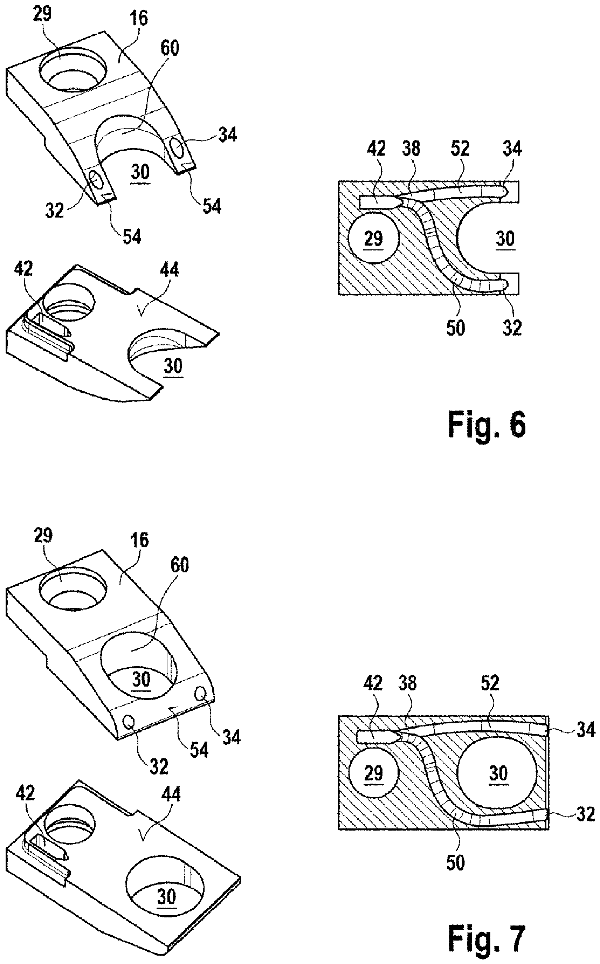

Zur Kühlmittelführung innerhalb des Werkzeugs 10 ist im Inneren des Halters 12 ein erster interner Kühlmittelkanal 36 angeordnet (siehe Fig. 3 und 5). In montiertem Zustand des Werkzeugs 10 mündet dieser erste interne Kühlmittelkanal in einen zweiten internen Kühlmittelkanal 38, welcher sich im Inneren des Kühlmittelführungsaufsatzes 16 befindet (siehe Fig. 6 und 7). Zur besseren Verständlichkeit der Zeichnungen sei darauf hingewiesen, dass sich die in Fig. 3 und 5 gezeigten Längsschnitt-Ansichten dadurch unterscheiden, dass Fig. 3 einen zentral angeordneten Längsschnitt zeigt und Fig. 5 einen außermittig angeordneten Längsschnitt zeigt. Die beiden Schnitte sind in Fig. 4 angedeutet, wobei in Fig. 4 der Kühlmittelführungsaufsatz 16 nicht dargestellt ist.

Der im Inneren des Halters 12 angeordnete erste interne Kühlmittelkanal 36 endet an einer Kühlmittelaustrittsöffnung 40, der an einer Außenseite 46 des Halters 12 angeordnet ist (siehe Fig. 2 und 4). An dieser Stelle geht das Kühlmittel in montiertem Zustand des Werkzeugs 10 von dem ersten internen Kühlmittelkanal 36 in den zweiten Kühlmittelkanal 38 über. Der im Inneren des Kühlmittelführungsaufsatzes 16 angeordnete zweite interne Kühlmittelkanal 38 weist eine Kühlmitteleintrittsöffnung 42 auf, die auf einer Unterseite 44 des Kühlmittelführungsaufsatzes 16 angeordnet ist, welche in montiertem Zustand des Werkzeugs 10 der Außenseite 46 des Halters 12 zugewandt ist (siehe Fig. 6 und 7). In Bezug auf die Längsachse 48 des Werkzeugs 10 fließt das Kühlmittel 10 innerhalb des Kühlmittelführungsaufsatzes 16, also sozusagen von hinten nach vorne. Bei der Außenseite 46 handelt es sich vorzugsweise, wie vorliegend gezeigt, um die Oberseite des Halters 12. Dies muss jedoch nicht unbedingt der Fall sein, da die Kühlmittelaustrittsöffnung 40 je nach Einbausituation der Schneidplatte 14 grundsätzlich auch an einer anderen Seite des Halters 12 angeordnet sein kann. Im Übrigen schließt die vorliegende Formulierung "der Außenseite 46 des Halters 12 zugewandt" nicht aus, dass zwischen dem Halter 12 und dem Kühlmittelführungsaufsatz 16 an dieser Stelle noch ein weiteres Element, z.B. eine Einlegescheibe, angeordnet ist.

In dem in Fig. 1-7 gezeigten ersten Ausführungsbeispiel weist der zweite interne Kühlmittelkanal 38 zwei voneinander abzweigende Kanalteile 50, 52 auf. Der erste Kanalteil 50 mündet in die erste Kühlmittelaustrittsöffnung 32. Der zweite Kanalteil 52 mündet in die zweite Kühlmittelaustrittsöffnung 34. Beide Kühlmittelaustrittsöffnungen 32, 34 sind demnach mit der Kühlmitteleintrittsöffnung 42 fluidisch verbunden. Die Vorderseite 54 des Kühlmittelführungsaufsatzes 16, an der die Kühlmittelaustrittsöffnungen 32, 34 angeordnet sind, verläuft quer zu der Unterseite 44, an der die Kühlmitteleintrittsöffnung 42 angeordnet ist.

Wie des Weiteren aus Fig. 6 und 7 ersichtlich ist, handelt es sich bei den beiden Kanalteilen 50, 52 um bogenförmig gekrümmte, also nicht eckige Kanäle, die sich zumindest teilweise um die erste Öffnung 30 herum erstrecken. Durch deren Krümmung ist es - anders als mit eckigen bzw. winkligen Kühlmittelkanälen - möglich, das Kühlmittel auf fluiddynamisch optimale Weise an der ersten Öffnung 30 vorbei zu lenken und bis zu den Kühlmittelaustrittsöffnungen 32, 34 zu leiten. Damit ist es auch möglich, die beiden Kühlmittelaustrittsöffnungen 32, 34 auf gegenüberliegenden Seiten der ersten Öffnung 30 anzuordnen und die Kühlmittelaustrittsöffnungen 32, 34 im Inneren des Kühlmittelführungsaufsatzes 16 dennoch mit ein und derselben Kühlmitteleintrittsöffnung 42 fluidisch zu verbinden.

Auf herkömmliche Art und Weise, also durch nachträgliches Einbringen von Bohrungen in den Kühlmittelführungsaufsatz 16, lassen sich solche Kanalteile 50, 52 kaum herstellen. Der Kühlmittelführungsaufsatz 16 wird daher vorzugsweise durch additive Fertigung hergestellt. Die Einbringung von bogenförmig gekrümmten Kanalteilen stellt bei der additiven Fertigung des Kühlmittelführungsaufsatzes 16 keinerlei Probleme dar.

Trotz des durch die erste Öffnung 30 gewährleisteten Zugangs zu dem ersten Befestigungselement 22 ermöglicht die oben genannte Art der Ausgestaltung des zweiten internen Kühlmittelkanals 38 somit dennoch eine sehr schneidennahe Kühlung der Schneidplatte 14. Die Kühlmittelaustritte 32, 34 lassen sich sehr exakt auf die Spanfläche 56 und/oder die Hauptschneidkante 58 der Schneidplatte 14 ausrichten. Aufgrund der bogenförmigen Krümmung der Kühlmittelkanäle 50, 52 muss das Kühlmittel auch nicht zwangsläufig parallel zu der Längsachse 48 des Werkzeugs aus dem Kühlmittelführungsaufsatz 16 austreten. Je nach Krümmung der Kanalteile 50, 52 lässt sich auch ein schräg zur Längsachse 48 ausgerichteter Kühlmittelstrahl erzeugen. Somit können nahezu alle Teile der Spanfläche 56 und/oder der Hauptschneidkante 58 optimal mit Kühlmittel versorgen. Es sei darauf hingewiesen, dass die Hauptschneidkante 58 im vorliegenden Ausführungsbeispiel zwar als gerade Schneidkante ausgebildet ist, grundsätzlich jedoch jede mögliche Form und Größe aufweisen kann.

Zur bevorzugten relativen Anordnung der zuvor genannten Elemente des Werkzeugs 10 lässt sich Folgendes anmerken: Die Kühlmittelaustrittsöffnungen 32, 34 sind zumindest auf gleicher Höhe wie eine Mittelachse 23 des ersten Befestigungselementes 22 angeordnet. Vorzugsweise sind die Kühlmittelaustrittsöffnungen 32, 34 sogar näher an der Hauptschneidkante 58 angeordnet als die Mittelachse 23 des ersten Befestigungselementes 22. In Bezug auf eine orthogonal zu der Längsachse 48 des Halters 12 ausgerichtete imaginäre Bezugsebene E, welche das zweite Befestigungselement 24 in zwei gleich große Hälften teilt, sind die Kühlmittelaustrittsöffnungen 32, 34 vorzugsweise in einem Abstand $d_1$ bzw. $d_2$ von der Bezugsebene E angeordnet, der gleich groß oder größer ist wie ein Abstand $d_3$ der Mittelachse 23 des ersten Befestigungselementes 22 von dieser Bezugsebene E.

Sofern vorliegend Abstände von oder zu den Kühlmittelaustrittsöffnungen 32, 34 die Rede ist, kann sich dies auf einen beliebigen Punkt der Kühlmittelaustrittsöffnungen 32, 34 beziehen. Vorzugsweise, aber nicht notwendigerweise wird dabei jedoch Bezug auf den geometrischen Mittelpunkt der Kühlmittelaustrittsöffnungen 32, 34 genommen.

In dem vorliegend gezeigten Ausführungsbeispiel sind die beiden Kühlmittelaustrittsöffnungen 32, 34 auf gleicher Höhe angeordnet. Dies muss jedoch nicht zwangsläufig der Fall sein. Je nach Form der Hauptschneidkante 58 können diese auch in unterschiedlichem Abstand zu der Hauptschneidkante 58 bzw. der Bezugsebene E angeordnet sein, so dass dann gilt: $d_1 \neq d_2$.

Erfindungsgemäß gilt jedoch bevorzugt: $d_3 \leq d_2 \leq d_1 < d_4$, wobei $d_4$ den Abstand von der Hauptschneidkante 58 zu der imaginären Bezugsebene E bezeichnet.

In Fig. 3 und 5 sind des Weiteren noch die Abstände $d_5$ und $d_6$ eingezeichnet. Der Abstand $d_5$ bezeichnet den Abstand zwischen der Kühlmitteleintrittsöffnung 42 von der Bezugsebene E. Der Abstand $d_6$ bezeichnet den Abstand eines Teils der Innenwandung 60 der ersten Öffnung 30, der im Vergleich zu den übrigen Teilen der Innenwandung 60 der imaginären Bezugsebene E am nächsten gelegen ist, von der Bezugsebene E. Dieser Abstand $d_6$ ist vorzugsweise größer als der Abstand $d_5$. Besonders bevorzugt ist der Abstand $d_6$ jedoch kleiner als der Abstand $d_3$. Demnach ergibt sich vorzugsweise die folgende Abstandsbeziehung:

$$d_5 < d_6 < d_3 \leq d_2 \leq d_1 < d_4$$

Bei dem in Fig. 7 dargestellten Ausführungsbeispiel des Kühlmittelführungsaufsatzes 16 ist die erste Öffnung 30 nicht als Aussparung, sondern als Durchgangsöffnung ausgestaltet. Im Vergleich zu dem in Fig. 6 gezeigten Ausführungsbeispiel ist ferner die vordere Stirnseite 54 des Kühlmittelführungsaufsatzes 16 etwas anders geformt. Beide Ausführungsbeispiele des Kühlmittelführungsaufsatzes 16 lassen sich jedoch bei dem in Fig. 1-5 gezeigten Werkzeug 10 in ähnlicher Weise einsetzen.

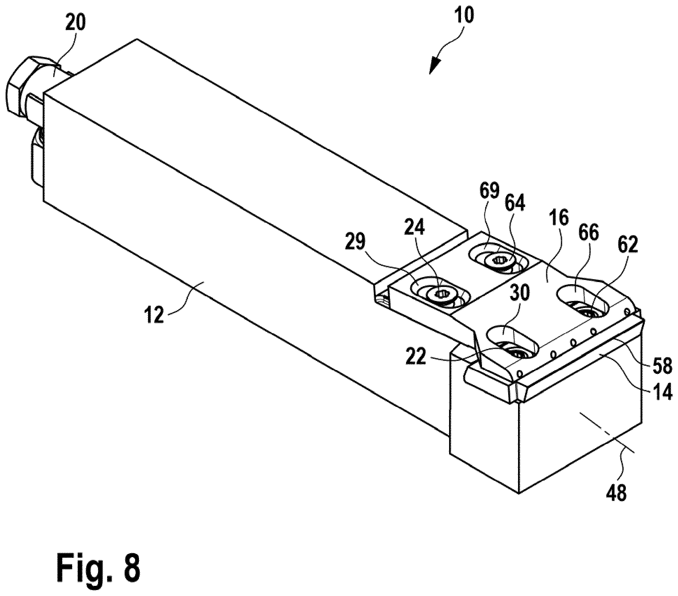

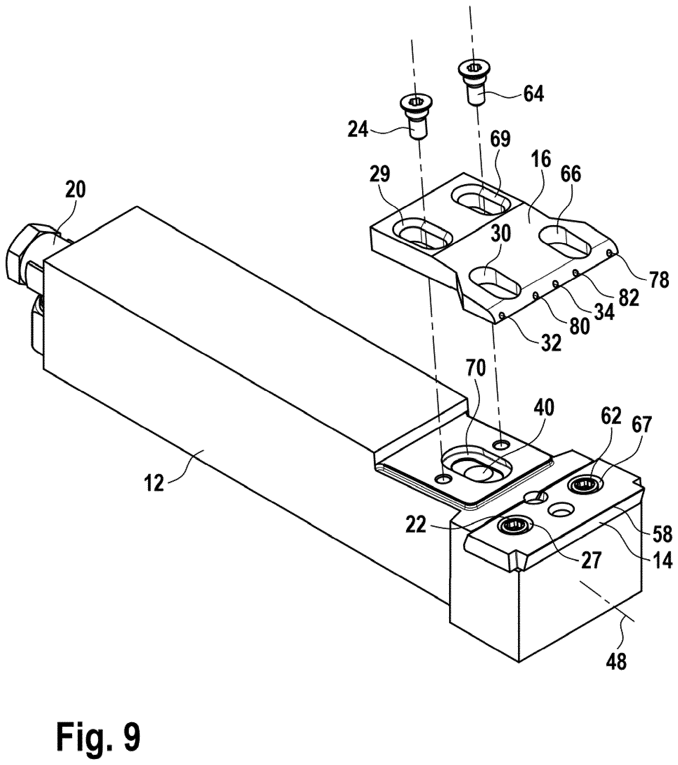

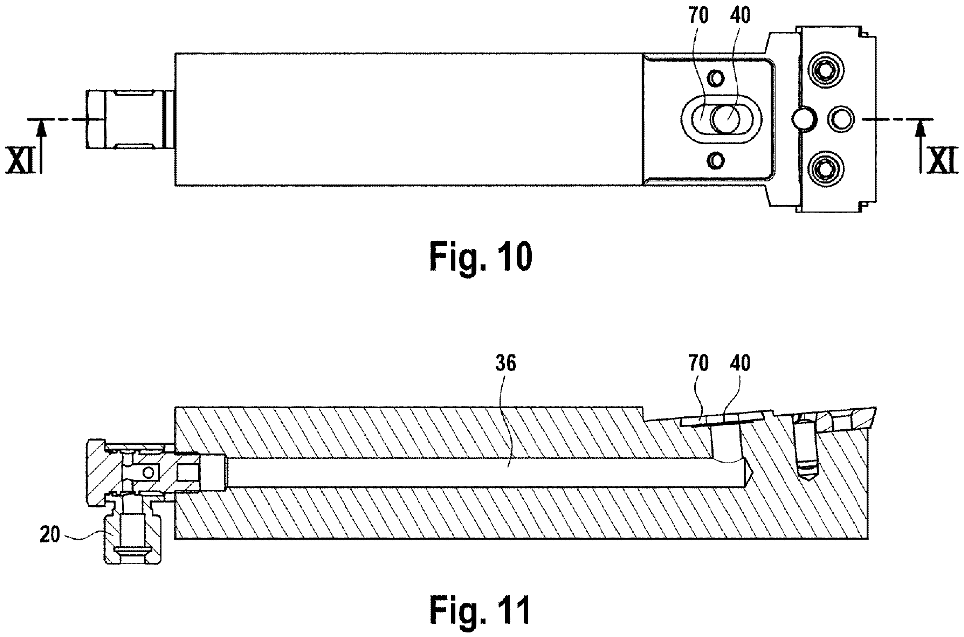

Die Fig. 8-12 zeigen ein zweites Ausführungsbeispiel des erfindungsgemäßen Werkzeugs 10. Dieses zweite erfindungsgemäße Ausführungsbeispiel folgt ebenfalls dem erfinderischen Prinzip und Aufbau, welches oben in Bezug auf das in Fig. 1-7 gezeigte erste Ausführungsbeispiel erläutert ist. Nachfolgend wird der Einfachheit halber daher lediglich auf die Unterschiede der beiden Ausführungsbeispiele näher eingegangen.

Das Werkzeug 10 gemäß dem in Fig. 8-12 gezeigten Ausführungsbeispiel ist vergleichsweise breiter ausgestaltet (nicht zwangsläufig in absoluten Dimensionen). Dementsprechend haben auch die Schneidplatte 14 und der Kühlmittelführungsaufsatz 16 einen vergleichsweise breiteren Aufbau. Der Kühl-/Schmiermittelanschluss 20 ist ebenfalls etwas anders ausgestaltet. Im Wesentlichen besteht jedoch der Unterschied im Aufbau des Kühlmittelführungsaufsatzes 16 sowie in der Anbringung der Schneidplatte 14 und des Kühlmittelführungsaufsatzes 16 am Halter 12.

Die Schneidplatte 14 ist, zusätzlich zu dem ersten Befestigungselement 22, mithilfe eines dritten Befestigungselements 62 am Halter 12 lösbar befestigt. Der Kühlmittelführungsaufsatz 16 ist, zusätzlich zu dem zweiten Befestigungselement 24, mithilfe eines vierten Befestigungselements 64 am Halter 12 lösbar befestigt. Alle vier Befestigungselemente 22, 24, 62, 64 sind auch in diesem Ausführungsbeispiel vorzugsweise als Spannschrauben ausgestaltet.

Zusätzlich zu der ersten Befestigungsöffnung 27 ist in der Schneidplatte 14 eine dritte Befestigungsöffnung 67 angeordnet, durch welche das dritte Befestigungselement 62 hindurch in den Halter 12 eingesetzt ist. Am Kühlmittelführungsaufsatz 16 ist zusätzlich zu der zweiten Befestigungsöffnung 29 eine vierte Befestigungsöffnung 69 angeordnet, durch welche das vierte Befestigungselement 64 hindurch in den Halter 12 eingesetzt ist.

Ferner weist der Kühlmittelführungsaufsatz 16 zusätzlich zu der ersten Öffnung 30 eine zweite Öffnung 66 auf, welche einen Zugang zu dem dritten Befestigungselement 62 ermöglicht. Somit ist auch bei diesem Ausführungsbeispiel ein separater Austausch von Kühlmittelführungsaufsatz 16 und Schneidplatte 14 möglich.

Die zweite Befestigungsöffnung 29, die vierte Befestigungsöffnung 69, die erste Öffnung 30 und die zweite Öffnung 66 sind gemäß dieses Ausführungsbeispiels jeweils als Langlöcher ausgestaltet. Dies eröffnet die Möglichkeit, den Kühlmittelführungsaufsatz 16 parallel zur Längsachse 48 des Werkzeugs 10 zu verstellen. Unabhängig von der eingestellten Position des Kühlmittelführungsaufsatzes 16 lässt sich aufgrund der ebenfalls als Langlöcher ausgestalteten Öffnungen 30, 66 die Schneidplatte 14 auch bei montiertem Kühlmittelaufsatz 16 vom Halter 12 lösen.

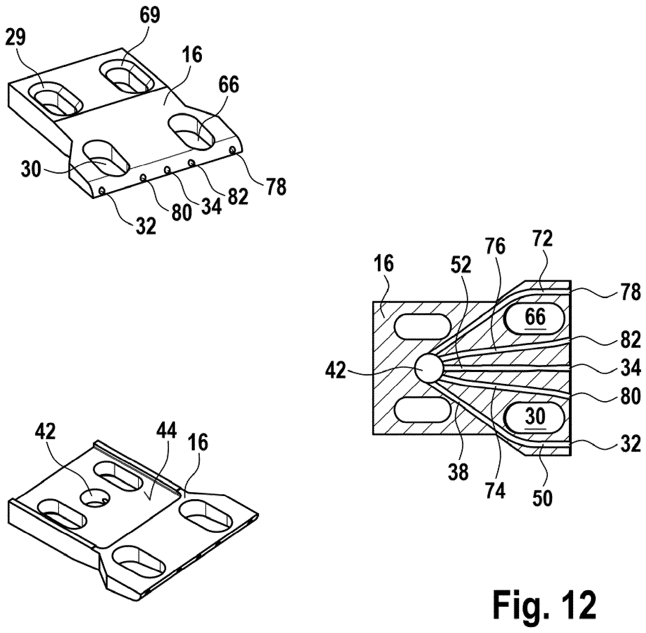

Um die Kühlmittelzufuhr in jeglichen einstellbaren Positionen des Kühlmittelführungsaufsatzes 16 gewährleisten zu können, mündet die Kühlmittelaustrittsöffnung 40 des ersten internen Kühlmittelkanals 36 in ein Langloch 70. Die auf der Unterseite 44 des Kühlmittelführungsaufsatzes 16 angeordnete Kühlmitteleintrittsöffnung 42 in den zweiten internen Kühlmittelkanal 38 ist in diesem Ausführungsbeispiel als Sackloch ausgestaltet, an dessen Umfang sich mehrere Kanalteile 50, 52, 72, 74, 76 des zweiten internen Kühlmittelkanals 38 anschließen (siehe Fig. 12).

Die beiden in Fig. 12 mit den Bezugsziffern 50, 52 gekennzeichneten Kanalteile entsprechen in ihrer Anordnung den in Fig. 6 und 7 gezeigten Kanalteilen 50, 52 beidseits der ersten Öffnung 30, weshalb deren Nomenklatur und Bezugsziffern beibehalten werden. Diese beiden Kanalteile 50, 52 münden jeweils in die entsprechenden ersten und zweiten Kühlmittelaustrittsöffnungen 32, 34. Ein dritter Kanalteil 72 mündet in eine dritte Kühlmittelaustrittsöffnung 78. Ein vierter Kanalteil 74 mündet in eine vierte Kühlmittelaustrittsöffnung 80. Ein fünfter Kanalteil 76 mündet in eine fünfte Kühlmittelaustrittsöffnung 82.

Der erste Kanalteil 50 und der dritte Kanalteil 72 sind in diesem Ausführungsbeispiel als zumindest teilweise bogenförmige Kanalteile ausgestaltet. Der zweite Kanalteil 34 ist in diesem Ausführungsbeispiel ungekrümmt, also gerade ausgestaltet. Der vierte Kanalteil 74 und der fünfte Kanalteil 76 sind in diesem Ausführungsbeispiel ebenfalls teilweise gekrümmt ausgestaltet, können grundsätzlich aber auch als ungekrümmte, also gerade Kanalteile ausgestaltet sein. Ebenso wäre es bei dieser Art von Aufbau des Kühlmittelführungsaufsatzes 16 denkbar, den vierten Kanalteil 74 und den fünften Kanalteil 76 ganz wegzulassen. Vorzugsweise ist bei dieser Art des Aufbaus des Kühlmittelführungsaufsatzes 16 jedoch zumindest ein Kanalteil zwischen den beiden Öffnungen 30, 76 angeordnet und jeweils zumindest ein Kanalteil auf den der Mitte gegenüberliegenden Seiten der Öffnungen 30, 66 angeordnet.

Bei einem Vergleich der beiden vorliegend gezeigten Ausführungsbeispiele des erfindungsgemäßen Werkzeugs 10 ergeben sich für den Fachmann ferner diverse weitere Abwandlungsmöglichkeiten im Aufbau des Kühlmittelführungsaufsatzes 16 und dessen Befestigung am Halter.

**Patentansprüche**

1. Werkzeug (10) zur spanabhebenden Bearbeitung eines Werkstücks, aufweisend:

   - ein sich im Wesentlichen entlang einer Längsachse (48) erstreckender Halter (12) mit einem ersten internen Kühlmittelkanal (36);
   - eine Schneidplatte (14) mit einer Hauptschneidkante (58);
   - ein erstes Befestigungselement (22) zur lösbaren Befestigung der Schneidplatte (14) am Halter (12);
   - ein im Wesentlichen plattenförmiger Kühlmittelführungsaufsatz (16) mit einem zweiten internen Kühlmittelkanal (38); und
   - ein zweites Befestigungselement (24) zur lösbaren Befestigung des Kühlmittelführungsaufsatzes (16) am Halter (12);

   wobei in montiertem Zustand des Werkzeugs (10) der erste interne Kühlmittelkanal (36) mit dem zweiten internen Kühlmittelkanal (38) fluidisch verbunden ist,
   wobei der Kühlmittelführungsaufsatz (16) eine als Aussparung oder Durchgangsöffnung ausgestaltete erste Öffnung (30) aufweist, welche einen Zugang zu dem ersten Befestigungselement (22) ermöglicht, so dass die Schneidplatte (14) durch Lösen des ersten Befestigungselements (22) auch bei am Halter (12) befestigtem Kühlmittelführungsaufsatz (16) separat von dem Halter (12) lösbar ist und der Kühlmittelführungsaufsatz (16) durch Lösen des zweiten Befestigungselements (24) auch bei am Halter (12) befestigter Schneidplatte (14) separat von dem Halter (12) lösbar ist,
   wobei der zweite interne Kühlmittelkanal (38) eine erste Kühlmittelaustrittsöffnung (32) und eine zweite Kühlmittelaustrittsöffnung (34) aufweist, an denen Kühlmittel aus dem zweiten internen Kühlmittelkanal (38) austritt, wobei die erste und die zweite Kühlmittelaustrittsöffnung (32, 34) an einer der Hauptschneidkante (58) zugewandten Vorderseite (54) des Kühlmittelführungsaufsatzes (16) auf gegenüberliegenden Seiten der ersten Öffnung (30) angeordnet sind,

dadurch gegenzeichnet,

dass der Kühlmittelführungsaufsatz (16) zumindest einen Teil der Schneidplatte (14) überdeckt, wobei die erste Kühlmittelaustrittsöffnung (32) von einer imaginären Bezugsebene (E), die orthogonal zu der Längsachse (48) des Halters (12) ausgerichtet ist und in der eine Mittelachse (25) des zweiten Befestigungselementes (24) liegt, einen ersten Abstand $(d_1)$ hat, die zweite Kühlmittelaustrittsöffnung (34) von der imaginären Bezugsebene (E) einen zweiten Abstand $(d_2)$ hat, eine Mittelachse (23) des ersten Befestigungselement (24) von der imaginären Bezugsebene (E) einen dritten Abstand $(d_3)$ hat, und zumindest ein Punkt auf der Hauptschneidkante (58) einen vierten Abstand $(d_4)$ von der imaginären Bezugsebene (E) hat, und wobei gilt: dritter Abstand $(d_3) \le$ zweiter Abstand $(d_2) \le$ erster Abstand $(d_1) <$ vierter Abstand $(d_4)$.

2. Werkzeug nach Anspruch 1, wobei der erste Abstand $(d_1)$ gleich groß wie der zweite Abstand $(d_2)$ ist.

3. Werkzeug nach Anspruch 1 oder 2, wobei der erste Abstand $(d_1)$ und der zweite Abstand $(d_2)$ jeweils größer als der dritte Abstand $(d_3)$ sind.

4. Werkzeug nach einem der Ansprüche 1-3, wobei der zweite interne Kühlmittelkanal (38) eine Kühlmitteleintrittsöffnung (42), an der das Kühlmittel in den zweiten internen Kühlmittelkanal (38) eintritt, aufweist, wobei die Kühlmitteleintrittsöffnung (42) einen fünften Abstand $(d_5)$ von der imaginären Ebene (E) hat, der kleiner als der dritte Abstand $(d_3)$ ist.

5. Werkzeug nach Anspruch 4, wobei die Kühlmitteleintrittsöffnung (42) auf einer Unterseite (44) des Kühlmittelführungsaufsatzes (16) angeordnet ist, welche in montiertem Zustand des Werkzeugs (10) einer Außenseite (46) des Halters (12) zugewandt ist.

6. Werkzeug nach einem der Ansprüche 1-5, wobei der zweite interne Kühlmittelkanal (38) sich im Inneren des Kühlmittelführungsaufsatzes (16) zumindest teilweise um die erste Öffnung (30) herum erstreckt.

7. Werkzeug nach einem der Ansprüche 1-6, wobei die erste Öffnung (30) in Umfangsrichtung durch eine Innenwandung (60) begrenzt ist, wobei ein Teil dieser Innenwandung (60), welcher im Vergleich zu den übrigen Teilen der Innenwandung (60) der imaginären Bezugsebene (E) am nächsten gelegen ist, einen sechsten Abstand $(d_6)$ von der imaginären Bezugsebene (E) hat, der kleiner als der dritte Abstand $(d_3)$ ist.

8. Werkzeug nach einem der Ansprüche 1-7, wobei der zweite interne Kühlmittelkanal (38) zumindest einen gekrümmten Abschnitt hat.

9. Werkzeug nach einem der Ansprüche 1-8, wobei der Kühlmittelführungsaufsatz (16) durch additive Fertigung hergestellt ist.

10. Werkzeug nach einem der Ansprüche 1-9, wobei der zweite interne Kühlmittelkanal (38) einen ersten Kanalteil (50), welcher in die erste Kühlmittelaustrittsöffnung (32) mündet, und einen zweiten Kanalteil (52), welcher in die zweite Kühlmittelaustrittsöffnung (34) mündet, aufweist, wobei sowohl der erste als auch der zweite Kanalteil (50, 52) fluidisch mit der Kühlmitteleintrittsöffnung (42) verbunden sind.

11. Werkzeug nach einem der Ansprüche 1-10, wobei die erste Öffnung (30) ein Langloch ist.

12. Werkzeug nach einem der Ansprüche 1-9 oder 11, wobei das Werkzeug (10) zusätzlich zu dem ersten Befestigungselement (22) ein drittes Befestigungselement (62) zur Befestigung der Schneidplatte (14) am Halter (12) aufweist, wobei der Kühlmittelführungsaufsatz (16) eine als Aussparung oder Durchgangsöffnung ausgestaltete zweite Öffnung (66) aufweist, welche einen Zugang zu dem dritten Befestigungselement (62) ermöglicht.

13. Werkzeug nach Anspruch 12, wobei der zweite interne Kühlmittelkanal (38) einen ersten Kanalteil (50), welcher in die erste Kühlmittelaustrittsöffnung (32) mündet, einen zweiten Kanalteil (52), welcher in die zweite Kühlmittelaustrittsöffnung (34) mündet, und einen dritten Kanalteil (72), welcher in eine dritte Kühlmittelaustrittsöffnung (78) mündet, aufweist, wobei die erste Öffnung (30) zwischen dem ersten und dem zweiten Kanalteil (50, 52) angeordnet ist, und wobei die zweite Öffnung (66) zwischen dem zweiten und dem dritten Kanalteil (52; 72) angeordnet ist.

14. Werkzeug nach einem der Ansprüche 1-13, wobei die Schneidplatte (14) eine erste Befestigungsöffnung (27) und der Kühlmittelführungsaufsatz (16) eine zweite Befestigungsöffnung (29) aufweist, wobei das erste Befestigungselement (22) in montiertem Zustand des Werkzeugs (10) durch die erste Befestigungsöffnung (27) hindurch in den Halter (12) eingesetzt ist, und wobei das zweite Befestigungselement (24) in montiertem Zustand des Werkzeugs (10) durch die zweite Befestigungsöffnung (29) hindurch in den Halter (12) eingesetzt ist.

15. Werkzeug nach einem der Ansprüche 1-14, wobei das erste Befestigungselement (22) eine erste Schraube und das zweite Befestigungselement (24) eine zweite Schraube aufweist, und wobei der Halter (12) ein erstes Innengewinde (26) zum Einschrauben der ersten Schraube sowie ein zweites Innengewinde (28) zum Einschrauben der zweiten Schraube aufweist.

## Claims

1. Tool (10) for machining a workpiece, comprising:

   - a holder (12), extending substantially along a longitudinal axis (48), having a first internal coolant duct (36);
   - a cutting insert (14) having a main cutting edge (58);
   - a first fastening element (22) for releasably fastening the cutting insert (14) to the holder (12);
   - a substantially plate-like coolant guiding attachment (16) having a second internal coolant duct (38); and
   - a second fastening element (24) for releasably fastening the coolant guiding attachment (16) to the holder (12);

   wherein, in an assembled state of the tool (10), the first internal coolant duct (36) is fluidically connected to the second internal coolant duct (38),
   wherein the coolant guiding attachment (16) comprises a first opening (30), which is configured as a recess or through-opening and allows access to the first fastening element (22), such that the cutting insert (14) is separately releasable from the holder (12) by releasing the first fastening element (22) even when the coolant guiding attachment (16) is fastened to the holder (12), and the coolant guiding attachment (16) is separately releasable from the holder (12) by releasing the second fastening element (24) even when the cutting insert (14) is fastened to the holder (12),
   wherein the second internal coolant duct (38) comprises a first coolant outlet opening (32) and a second coolant outlet opening (34) at which coolant leaves the second internal coolant duct (38), wherein the first and the second coolant outlet opening (32, 34) are arranged on a front side (54) of the coolant guiding attachment (16) on opposite sides of the first opening (30), wherein said front side (54) of the coolant guiding attachment (16) faces the main cutting edge (58),
   **characterized in that** the coolant guiding attachment (16) covers at least a part of the cutting insert (14),
   wherein the first coolant outlet opening (32) is arranged at a first distance ($d_1$) from an imaginary reference plane (E) which is oriented perpendicularly to the longitudinal axis (48) of the holder (12) and in which a central axis (25) of the second fastening element (24) is located, wherein the second coolant outlet opening (34) is arranged at a second distance ($d_2$) from the imaginary reference plane (E), wherein a central axis (23) of the first fastening element (24) is arranged at a third distance ($d_3$) from the imaginary reference plane (E), and wherein at least one point on the main cutting edge (58) is arranged at a fourth distance ($d_4$) from the imaginary reference plane (E), and
   wherein the following applies: third distance ($d_3$) ≤ second distance ($d_2$) ≤ first distance ($d_1$) < fourth distance ($d_4$).

2. Tool according to claim 1, wherein the first distance ($d_1$) is equal to the second distance ($d_2$).

3. Tool according to claim 1 or 2, wherein the first distance ($d_1$) and the second distance ($d_2$) are each greater than the third distance ($d_3$).

4. Tool according to anyone of claims 1-3, wherein the second internal coolant duct (38) comprises a coolant inlet opening (42), at which the coolant enters the second internal coolant duct (38), wherein the coolant inlet opening (42) is arranged at a fifth distance ($d_5$) from the imaginary plane (E), which is less than the third distance ($d_3$).

5. Tool according to claim 4, wherein the coolant inlet opening (42) is arranged on an underside (44) of the coolant guiding attachment (16), said underside (44) facing an outer side (46) of the holder (12) in the assembled state of the tool (10).

6. Tool according to anyone of claims 1 to 5, wherein the second internal coolant duct (38) extends inside the coolant guiding attachment (16) around at least a part of the first opening (30).

7. Tool according to anyone of claims 1-6, wherein the first opening (30) is bounded in a circumferential direction by an inner wall (60), wherein a part of this inner wall (60) that is located closest to the imaginary reference plane (E) compared with all remaining parts of the inner wall (60) is arranged at a sixth distance ($d_6$) from the imaginary reference plane (E), which is less than the third distance ($d_3$).

8. Tool according to anyone of claims 1-7, wherein the second internal coolant duct (38) has at least one curved portion.

9. Tool according to anyone of claims 1-8, wherein the coolant guiding attachment (16) is produced by additive manufacturing.

10. Tool according to anyone of claims 1-9, wherein the second internal coolant duct (38) comprises a first duct part (50), which opens out into the first coolant outlet opening (32), and a second duct part (52), which opens out into the second coolant outlet opening (34), wherein both the first and the second duct part (50, 52) are fluidically connected to the coolant inlet opening (42).

11. Tool according to anyone of claims 1-10, wherein the first opening (30) is a slot.

12. Tool according to anyone of claims 1-9 or 11, wherein the tool (10), in addition to the first fastening element (22), comprises a third fastening element (62) for fastening the cutting insert (14) to the holder (12), wherein the coolant guiding attachment (16) comprises a second opening (66), which is configured as a recess or through-opening and allows access to the third fastening element (62).

13. Tool according to claim 12, wherein the second internal coolant duct (38) comprises a first duct part (50), which opens out into the first coolant outlet opening (32), a second duct part (52), which opens out into the second coolant outlet opening (34), and a third duct part (72), which opens out into a third coolant outlet opening (78), wherein the first opening (30) is arranged between the first and the second duct part (50, 52), and wherein the second opening (66) is arranged between the second and the third duct part (52; 72).

14. Tool according to anyone of claims 1-13, wherein the cutting insert (14) comprises a first fastening opening (27) and the coolant guiding attachment (16) comprises a second fastening opening (29), wherein in the assembled state of the tool (10), the first fastening element (22) is inserted into the holder (12) through the first fastening opening (27), and the second fastening element (24) is inserted into the holder (12) through the second fastening opening (29).

15. Tool according to anyone of claims 1-14, wherein the first fastening element (22) comprises a first screw and the second fastening element (24) comprises a second screw, and wherein the holder (12) comprises a first internal thread (26) for screwing in the first screw and a second internal thread (28) for screwing in the second screw.

**Revendications**

1. Outil (10) d'usinage d'une pièce par enlèvement de copeaux, comprenant :

   - un dispositif de support (12) s'étendant sensiblement le long d'un axe longitudinal (48) et doté d'un premier canal de réfrigérant interne (36) ;
   - une plaquette de coupe (14) dotée d'une arête de coupe principale (58) ;
   - un premier élément de fixation (22) pour la fixation libérable de la plaquette de coupe (14) au dispositif de support (12) ;
   - un élément rapporté de guidage de réfrigérant (16) sensiblement en forme de plaque et doté d'un deuxième canal de réfrigérant interne (38) ; et
   - un deuxième élément de fixation (24) pour la fixation libérable de l'élément rapporté de guidage de réfrigérant (16) au dispositif de support (12) ;

dans lequel, à l'état monté de l'outil (10), le premier canal de réfrigérant interne (36) est relié fluidiquement au deuxième canal de réfrigérant interne (38), dans lequel l'élément rapporté de guidage de réfrigérant (16) comprend une première ouverture (30) configurée comme évidement ou ouverture traversante, laquelle première ouverture permet un accès au premier élément de fixation (22), de sorte que la plaquette de coupe (14) peut être libérée séparément du dispositif de support (12) par libération du premier élément de fixation (22) même lorsque l'élément rapporté de guidage de réfrigérant (16) est fixé au dispositif de support (12) et de telle sorte que l'élément rapporté de guidage de réfrigérant (16) peut être libéré séparément du dispositif de support (12) par libération du deuxième élément de fixation (24) même lorsque la plaquette de coupe (14) est fixée au dispositif de support (12),
dans lequel le deuxième canal de réfrigérant interne (38) comprend une première ouverture de sortie de réfrigérant (32) et une deuxième ouverture de sortie de réfrigérant (34), au niveau desquelles du réfrigérant sort du deuxième canal de réfrigérant interne (38), dans lequel la première et la deuxième ouverture de sortie de réfrigérant (32, 34) sont disposées sur un côté avant (54), tourné vers l'arête de coupe principale (58), de l'élément rapporté de guidage de réfrigérant (16) sur des côtés opposés de la première ouverture (30),
**caractérisé en ce que**
l'élément rapporté de guidage de réfrigérant (16) recouvre au moins une partie de la plaquette de coupe (14),
la première ouverture de sortie de réfrigérant (32) étant située à une première distance ($d_1$) d'un plan de référence imaginaire (E) qui est orienté perpendiculairement à l'axe longitudinal (48) du dispositif de support (12) et dans lequel se situe un axe médian (25) du deuxième élément de fixation (24), la deuxième ouverture de sortie de réfrigérant (34) étant située à une deuxième distance ($d_2$) du plan de référence imaginaire (E), un axe médian (23) du premier élément de fixation (24) étant situé à une troisième distance ($d_3$) du plan de référence imaginaire (E), et au moins un point sur l'arête de coupe principale (58) étant situé à une quatrième distance ($d_4$) du plan de référence imaginaire (E), et où l'on a : troisième distance ($d_3$) ≤ deuxième distance ($d_2$) ≤ première distance ($d_1$) < quatrième distance ($d_4$).

2. Outil selon la revendication 1, dans lequel la première distance ($d_1$) est égale à la deuxième distance ($d_2$).

3. Outil selon la revendication 1 ou 2, dans lequel la première distance ($d_1$) et la deuxième distance ($d_2$) sont respectivement supérieures à la troisième distance ($d_3$).

4. Outil selon l'une des revendications 1 à 3, dans lequel le deuxième canal de réfrigérant interne (38) comprend une ouverture d'entrée de réfrigérant (42), au niveau de laquelle le réfrigérant entre dans le deuxième canal de réfrigérant interne (38), dans lequel l'ouverture d'entrée de réfrigérant (42) est disposée à une cinquième distance ($d_5$) du plan imaginaire (E), laquelle cinquième distance est inférieure à la troisième distance ($d_3$).

5. Outil selon la revendication 4, dans lequel l'ouverture d'entrée de réfrigérant (42) est disposée sur un côté inférieur (44) de l'élément rapporté de guidage de réfrigérant (16), lequel côté inférieur est, à l'état monté de l'outil (10), tourné vers un côté extérieur (46) du dispositif de support (12).

6. Outil selon l'une des revendications 1 à 5, dans lequel le deuxième canal de réfrigérant interne (38) s'étend au moins partiellement autour de la première ouverture (30) à l'intérieur de l'élément rapporté de guidage de réfrigérant (16).

7. Outil selon l'une des revendications 1 à 6, dans lequel la première ouverture (30) est limitée dans la direction périphérique par une paroi intérieure (60), dans lequel une partie de cette paroi intérieure (60), qui est disposée le plus près du plan de référence imaginaire (E) par comparaison avec les parties restantes de la paroi intérieure (60), est située à une sixième distance ($d_6$) du plan de référence imaginaire (E), laquelle sixième distance est inférieure à la troisième distance ($d_3$).

8. Outil selon l'une des revendications 1 à 7, dans lequel le deuxième canal de réfrigérant interne (38) comporte au moins une partie incurvée.

9. Outil selon l'une des revendications 1 à 8, dans lequel l'élément rapporté de guidage de réfrigérant (16) est produit par fabrication additive.

10. Outil selon l'une des revendications 1 à 9, dans lequel le deuxième canal de réfrigérant interne (38) comprend une première partie de canal (50), laquelle débouche dans la première ouverture de sortie de réfrigérant (32), et une deuxième partie de canal (52), laquelle débouche dans la deuxième ouverture de sortie de réfrigérant (34), dans lequel à la fois la première et la deuxième partie de canal (50, 52) sont reliées fluidiquement à l'ouverture d'entrée de réfrigérant (42).

11. Outil selon l'une des revendications 1 à 10, dans lequel la première ouverture (30) est un trou oblong.

12. Outil selon l'une des revendications 1 à 9 ou 11, dans lequel l'outil (10) comprend, en plus du premier élément de fixation (22), un troisième élément de fixation (62) pour la fixation de la plaquette de coupe (14) au dispositif de support (12), dans lequel l'élément rapporté de guidage de réfrigérant (16) comprend une deuxième ouverture (66) configurée comme évidement ou ouverture traversante, laquelle deuxième ouverture permet un accès au troisième élément de fixation (62).

13. Outil selon la revendication 12, dans lequel le deuxième canal de réfrigérant interne (38) comprend une première partie de canal (50), laquelle débouche dans la première ouverture de sortie de réfrigérant (32), une deuxième partie de canal (52), laquelle débouche dans la deuxième ouverture de sortie de réfrigérant (34), et une troisième partie de canal (72), laquelle débouche dans une troisième ouverture de sortie de réfrigérant (78), dans lequel la première ouverture (30) est disposée entre la première et la deuxième partie de canal (50, 52), et dans lequel la deuxième ouverture (66) est disposée entre la deuxième et la troisième partie de canal (52 ; 72).

14. Outil selon l'une des revendications 1 à 13, dans lequel la plaquette de coupe (14) comprend une première ouverture de fixation (27) et l'élément rapporté de guidage de réfrigérant (16) comprend une deuxième ouverture de fixation (29), dans lequel le premier élément de fixation (22) est inséré à travers la première ouverture de fixation (27) dans le dispositif de support (12) à l'état monté de l'outil (10) et dans lequel le deuxième élément de fixation (24) est inséré à travers la deuxième ouverture de fixation (29) dans le dispositif de support (12) à l'état monté de l'outil (10).

15. Outil selon l'une des revendications 1 à 14, dans lequel le premier élément de fixation (22) comprend une première vis et le deuxième élément de fixation (24) comprend une deuxième vis, et dans lequel le dispositif de support (12) comprend un premier taraudage (26) pour le vissage de la première vis ainsi qu'un deuxième taraudage (28) pour le vissage de la deuxième vis.

**10**

**20**

**12**

**24  16**

**22**

**34**

**56**

**32**

**58**

**14**

**18  48**

# Fig. 1

**Fig. 2**

**Fig. 3**

58
23
$d_4$
$d_3$
$d_6$
E
16
18
22 26 18
24 14
28
25
36
48
12

**Fig. 4**

**Fig. 5**

Fig. 6

Fig. 7

Fig. 8

**Fig. 9**

**Fig. 10**

**Fig. 11**

EP 3 624 972 B1

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3033626 A1
- DE 10331077 B3
- EP 1522382 A1
- WO 2010095124 A1
- DE 112011102930 T5